# EUROPÄISCHE PATENTSCHRIFT

(11) **EP 1 935 542 B1**
(45) Veröffentlichungstag und Bekanntmachung des Hinweises auf die Patenterteilung: **30.12.2009**
(21) Anmeldenummer: 07021014.1
(22) Anmeldetag: 26.10.2007
(51) Int. Cl.: B23D 45/04, B23D 47/02

(54) **Werkzeugmaschine mit einer Rast- und Klemmeinrichtung**
Machine tool with a catch and clamp device
Machine-outil dotée d'un dispositif d'arrêt et de serrage

(30) Priorität: 18.12.2006 DE 102006059751
(43) Veröffentlichungstag der Anmeldung: 25.06.2008
(73) Patentinhaber: Festool GmbH, 73240 Wendlingen (DE)
(72) Erfinder: Noll, Carola, 73275 Ohmden (DE); Kneip, Christian, 73230 Kirchheim (DE)
(74) Vertreter: Bregenzer, Michael

(56) Entgegenhaltungen:
- EP-A- 0 779 122
- EP-A- 1 256 407

## Beschreibung

Die Erfindung betrifft eine Werkzeugmaschine, insbesondere eine Säge, zur trennenden Bearbeitung eines Werkstücks, gemäß dem Oberbegriff des Anspruchs 1.

Derartige Werkzeugmaschinen sind aus EP 1 256 407 A1 und EP 0 779 122 A2 bekannt. Bei diesen bekannten Werkzeugmaschinen sind jeweils ein eine Klemm-Betätigungseinrichtung bildender Klemmhebel und ein eine Rast-Betätigungseinrichtung bildender Rasthebel an einem Gehäuse gelagert.

Eine Werkzeugmaschine in Gestalt einer Hubsäge mit einem Kapptisch ist aus der DE 198 03 955 A1 bekannt. Ein Drehtisch zum Auflegen eines Werkstückes ist an einem Kapptisch drehbar oder schwenkbar gelagert. Entsprechend der Winkelposition des Drehtisches können Gehrungsschnitte mit der Hubsäge durchgeführt werden. Eine Rasteinrichtung stellt Rastpositionen für verschiedene Winkelpositionen des Drehtisches bereit. Eine Klemmschraube dient als Klemmeinrichtung und ermöglicht ein freies Festlegen des Schwenkteils bzw. Drehtisches an Winkelpositionen zwischen den rastbaren Winkelpositionen.

Die beliebigen Winkel des Schwenkteils sind nur dann stufenlos einstellbar, wenn die Entriegelungstaste gedrückt gehalten wird, so dass die Rasteinrichtung im Bereich der Rastpositionen nicht verrastet. Die Klemmschraube oder Klemmeinrichtung wird entsprechend der gewählten Winkelposition des Drehtisches arretiert. Die Klemmschraube und die Entriegelungstaste sind unbequem zu bedienen.

Es ist daher die Aufgabe der Erfindung, eine Werkzeugmaschine bereitzustellen, bei der eine Klemm-Betätigungseinrichtung und eine Rast-Betätigungseinrichtung ergonomisch günstig zum Klemmen des Schwenkteils zwischen Rastpositionen der Rasteinrichtung bedient werden können.

Zur Lösung der Aufgabe ist eine Werkzeugmaschine gemäß der technischen Lehre des Anspruchs 1 vorgesehen.

Die Rast-Betätigungshandhabe und die Klemm-Betätigungshandhabe sind mit einer Hand bedienbar. Dadurch ist es leicht möglich, die Rast-Betätigungshandhabe in der Rastfreigabestellung zu halten, während die Klemmeinrichtung bedient wird. Vorteilhaft wird zum Erreichen der Rastfreigabestellung die Rast-Betätigungshandhabe relativ zu der Klemm-Betätigungshandhabe hin bewegt.

Die Rast-Betätigungseinrichtung umfasst einen Rast-Betätigungshebel mit einer Betätigungspartie zum Verstellen der Rasteinrichtung in die Rastfreigabestellung und/oder die Raststellung. Die Klemm-Betätigungseinrichtung enthält einen Klemmbetätigungshebel, der die Klemmeinrichtung mit einer Betätigungspartie in die Klemmfreigabestellung oder die Klemmstellung bringt.

Der Rast-Betätigungshebel ist schwenkbar an dem Klemm-Betätigungshebel gelagert. Die Hebelachse befindet sich vorteilhaft in einem Mittelabschnitt des Klemm-Betätigungshebels. Dieser wiederum ist zweckmäßigerweise vorn, im Bereich seiner Betätigungspartie, schwenkbar gelagert. Somit hat der Klemm-Betätigungshebel einen längeren Hebelarm als der Rast-Betätigungshebel. Von der gemeinsamen Hebelachse der beiden Betätigungshebel hingegen haben die Betätigungspartien des Rast-Betätigungshebels und des Klemmbetätigungshebels jeweils vorteilhaft denselben Hebelabstand.

Möglich ist es auch, den Klemm-Betätigungshebel am Rast-Betätigungshebel schwenkbar zu lagern.

Die gemeinsame Hebelachse des Rast-Betätigungshebels und des Klemm-Betätigungshebels haben zweckmäßigerweise einen Längsabstand zu einer Schwenkachse des Klemm-Betätigungshebels.

Die Betätigungspartie des Rast-Betätigungshebels und eine Schwenklagerung des Klemm-Betätigungshebels sind vorteilhaft nahe beieinander angeordnet. Beispielsweise ist die Betätigungspartie des Rast-Betätigungshebels neben der Schwenklagerung des Klemm-Betätigungshebels, z.B. einer Kerblagerung, angeordnet. Die Schwenklagerung des Klemm-Betätigungshebels und die Betätigungspartie des Rast-Betätigungshebels, insbesondere wenn dieser seine Rastfreigabestellung einnimmt, sind beispielsweise in Achsrichtung der Schwenkachse des Klemm-Betätigungshebels nebeneinander angeordnet. Beispielsweise ist die Betätigungspartie zwischen zwei Schwenklagerabschnitten des Klemm-Betätigungshebels positioniert.

Die Werkzeugmaschine ist zweckmäßigerweise eine Gehrungssäge. Auch die Anwendung der Erfindung bei Gehrungskappsägen oder Gehrungszugkappsägen ist vorteilhaft. Das Trennwerkzeug kann aber auch eine Trennscheibe sein, beispielsweise zum Schneiden von Fliesen, Stein oder dergleichen.

Die Rasteinrichtung und die Klemmeinrichtung sind zweckmäßigerweise an dem Schwenkteil angeordnet, während die Rastbasis und die Klemmbasis an der Schwenkbasis angeordnet sind. Die Rasteinrichtung und die Klemmeinrichtung können auch an der drehfesten Schwenkbasis und die Rastbasis und die Klemmbasis an dem schwenkbaren Teil angeordnet sein.

Bei dem Schwenkteil handelt es sich beispielsweise um einen Werkstücktisch zum Ablegen eines Werkstücks. Die Schwenkbasis oder Drehbasis umfasst in diesem Fall zweckmäßigerweise ein Maschinenbett. Das Schwenkteil kann auch ein schwenkbarer Anschlag eines Werkstücktisches sein. Ferner ist es denkbar, dass das Schwenkteil einen Schwenkträger zum Verschwenken einer Trenneinrichtung oder Sägeeinrichtung der Werkzeugmaschine bildet, wobei die Trenneinrichtung oder Sägeeinrichtung ein durch einen Antriebsmotor antreibbares Werkzeug enthält. Die Trenn- oder Sägeeinrichtung kann mit einer Hand in die gewünschte Winkelposition oder Schwenkposition gebracht werden.

Die Rasteinrichtung und die Klemmeinrichtung können Bestandteile einer integrierten Halteeinrichtung bilden. Ferner können die Rasteinrichtung und die Klemmeinrichtung in einem Gehäuse des Schwenkteils, beispielsweise des Werkstücktisches oder des Schwenkträgers, angeordnet sein.

Die Klemm-Betätigungshandhabe oder die Rast-Betätigungshandhabe, die beispielsweise Handgriffe oder Bedienvorsprünge enthalten, stehen zweckmäßigerweise vor das Schwenkteil vor. Die jeweilige Betätigungshandhabe bildet vorteilhaft eine Bedienhandhabe zum Schwenken des Schwenkteils. Somit kann das Schwenkteil durch Ergreifen der Klemm-Betätigungshandhabe oder der Rast-Betätigungshandhabe geschwenkt werden.

Vorteilhaft enthält die Klemm-Betätigungshandhabe ein mit der Hand umgreifbares Handstück. Die Rast-Betätigungshandhabe kann beispielsweise ein mit einem Finger betätigbares Finger-Betätigungsstück umfassen. Der Bediener kann das Handstück umgreifen und zugleich das Finger-Betätigungsstück mit einem Finger, beispielsweise seinem Daumen oder Zeigefinger, in der Rastlösestellung oder Rastfreigabestellung halten.

Es ist auch möglich, dass die Rast-Betätigungshandhabe einen Bedienvorsprung enthält, der beim Umgreifen des Handstückes der Klemm-Betätigungshandhabe mit umgriffen und damit sozusagen automatisch in Richtung der Rastfreigabestellung betätigt wird.

Die Rastbasis enthält vorteilhaft bogenförmig angeordnete Rastaufnahmen oder Rastvorsprünge. Beispielsweise sind die Rastaufnahmen an einem plattenartigen Bogenteil angeordnet. Auch bei der Klemmbasis ist es vorteilhaft, wenn sie durch ein vorzugsweise plattenartiges Bogenteil gebildet ist. Es ist möglich, dass die Rastbasis und die Klemmbasis durch zwei separate Bogenteile gebildet sind. Vorzugsweise sind die Klemmbasis und die Rastbasis jedoch durch ein einziges plattenartiges Bogenteil gebildet. Es versteht sich, dass die Rastaufnahmen oder Rastvorsprünge auch beispielsweise an einem Gehäuse oder Gehäusekörper der Schwenkbasis angeordnet sein können.

Die Rastaufnahmen oder Rastvorsprünge sind beispielsweise an einem Außenumfang, an einem Innenumfang, der Ober- oder der Unterseite der Rastbasis angeordnet. Beim Ausführungsbeispiel ist eine Variante realisiert, bei der die Rastaufnahmen oder Rastvorsprünge an einem Innenumfang des Bogenteils angeordnet sind, wohingegen eine Klemmpartie der Klemmbasis durch einen Außenumfangsbereich des Bogenteils gebildet ist.

Die Klemmeinrichtung oder die Rasteinrichtung sind zweckmäßigerweise in Richtung ihrer jeweiligen Klemm- bzw. Raststellung federbeaufschlagt. Dann werden die Klemm-Betätigungseinrichtung und die Rast-Betätigungseinrichtung nur benötigt, um die Klemmeinrichtung oder die Rasteinrichtung in ihre jeweilige Freigabestellung zu bringen. Die Rückstellung in die jeweilige Haltestellung erfolgt selbsttätig.

Die Rasteinrichtung enthält vorteilhaft in Richtung der Raststellung federbeaufschlagtes, durch die Rast-Betätigungseinrichtung betätigbares Rastteil zum Verrasten mit der Rastbasis. Beispielsweise ist das Rastteil in sich federnd, besteht beispielsweise aus einer federnden Platte. Ferner ist es möglich, dass eine zusätzliche Federanordnung vorgesehen ist, die auf das Rastteil wirkt. Mit der Rast-Betätigungseinrichtung ist das Rastteil in die Rastfreigabestellung bringbar. Durch die Federanordnung oder Rückstellanordnung wird das Rastteil in die Raststellung beaufschlagt. Somit rastet das Rastteil selbstständig in die Raststellung ein. Das Rastteil kann ein separates Bauteil sein oder auch einen Bestandteil der Rast-Betätigungseinrichtung bilden, z.B. ein Rastvorsprung oder eine Rastausnehmung an der Rast-Betätigungseinrichtung.

Die Klemmeinrichtung enthält ein vorzugsweise in Richtung der Klemmstellung federbeaufschlagtes, durch die Klemm-Betätigungseinrichtung betätigbares Klemmteil zum Verklemmen mit der Klemmbasis. Auch dieses Klemmteil kann federnd sein. Ferner ist es möglich, dass das Klemmteil durch eine Federanordnung in Richtung der Klemmstellung federbelastet ist. Das Klemmteil ist z.B. plattenartiges Teil.

Auch bei der Klemmpartie ist es denkbar, sie unmittelbar an der Betätigungseinrichtung anzuordnen. Ferner ist es möglich, dass die Klemmpartie einen Bestandteil eines von der Klemm-Betätigungseinrichtung separaten Bauelementes bildet.

Das Rastteil und das Klemmteil wirken zweckmäßigerweise von entgegengesetzten Seiten her auf die Rastbasis und die Klemmbasis.

Die Klemmeinrichtung, beispielsweise die Klemm-Betätigungseinrichtung ist zweckmäßigerweise in der Klemmstellung oder der Klemmfreigabestellung festlegbar, z.B. mit einer Rastanordnung oder einer Verriegelungseinrichtung. Es ist denkbar, dass die Klemmeinrichtung nur in einer der beiden Stellung festlegbar ist, z.B. in der Klemmstellung, oder in beiden Stellungen.

Bei der Rasteinrichtung ist es auch vorteilhaft, wenn sie in der Raststellung oder der Rastfreigabestellung festlegbar ist. Das Festlegen kann z.B. durch eine Feder bewirkt sein, die die Rasteinrichtung in die Raststellung beaufschlagt. Ferner ist denkbar, dass die Rasteinrichtung in der Raststellung oder der Rastfreigabestellung mittels eine Rastanordnung verrastet werden kann. Beim Ausführungsbeispiel ist dies zwar nicht realisiert. Durch entsprechende Rastvorsprünge oder Rastaufnahmen ist ein Einrasten der Rasteinrichtung in der Raststellung und/oder der Rastfreigabestellung ohne weiteres möglich.

Die Rast-Betätigungseinrichtung und die Klemm-Betätigungseinrichtung können bewegungsgekoppelt sein. Bei einer Betätigungshandlung an der Klemm-Betätigungseinrichtung wird beispielsweise die Rast-Betätigungseinrichtung mitgenommen. Dennoch bleibt die Rast-Betätigungseinrichtung vorteilhaft in ihrer jeweiligen Raststellung oder Rastfreigabestellung, auch wenn sie von der Klemm-Betätigungseinrichtung mitgenommen wird.

Zweckmäßigerweise ist die Rast-Betätigungseinrichtung derart frei beweglich gelagert, dass sie bei einem Verstellen der Klemm-Betätigungseinrichtung zwischen der Klemmfreigabestellung und der Klemmstellung die jeweilige Rastfreigabestellung oder Raststellung halten kann. Mithin ist also die Klemm-Betätigungseinrichtung verstellbar, ohne dass die Rasteinrichtung ihre jeweilige Stellung verlässt.

Der Klemm-Betätigungshebel ist zweckmäßigerweise im Bereich seiner Betätigungspartie schwenkbar gelagert. Beispielsweise ist der Klemm-Betätigungshebel an einem Gehäuse gelagert. Dabei ist Kerblagerung vorteilhaft. Durch die Lagerung im Bereich der Betätigungspartie steht ein langer Hebelarm zur Verfügung, so dass die Klemmung der Klemmeinrichtung auch dann leicht aufgehoben werden kann, wenn diese mit einer großen Klemmkraft, beispielsweise mit einer starken Feder, das Schwenkteil an der Klemmbasis festklemmt.

An dem Rast-Betätigungshebel und/oder an dem Klemm-Betätigungshebel sind zweckmäßigerweise Rastanordnungen zum Halten des Betätigungshebels in seiner jeweiligen Stellung angeordnet. Der Betätigungshebel bleibt dann in der Freigabestellung oder der Haltestellung. Beispielsweise sind die Rastanordnungen im Bereich der jeweiligen Betätigungspartie des Betätigungshebels angeordnet. Aber auch abseits der Betätigungspartien, beispielsweise an einer Längsseite des jeweiligen Betätigungshebels, können entsprechende Rastanordnungen angeordnet sein. Beim Ausführungsbeispiel ist eine Variante realisiert, bei der eine Rastanordnung des Klemm-Betätigungshebels in der Raststellung in eine Ausnehmung am Klemmteil eingreift. Eine solche Bauart wäre auch ohne weiteres bei dem Rast-Betätigungshebel denkbar. Die Gleitanordnung gleitet beispielsweise an dem Klemmteil oder Rastteil entlang. Die Walze rollt auf dem Rastteil oder Klemmteil.

Nachfolgend wird ein Ausführungsbeispiel anhand der Zeichnung erläutert. Es zeigen:

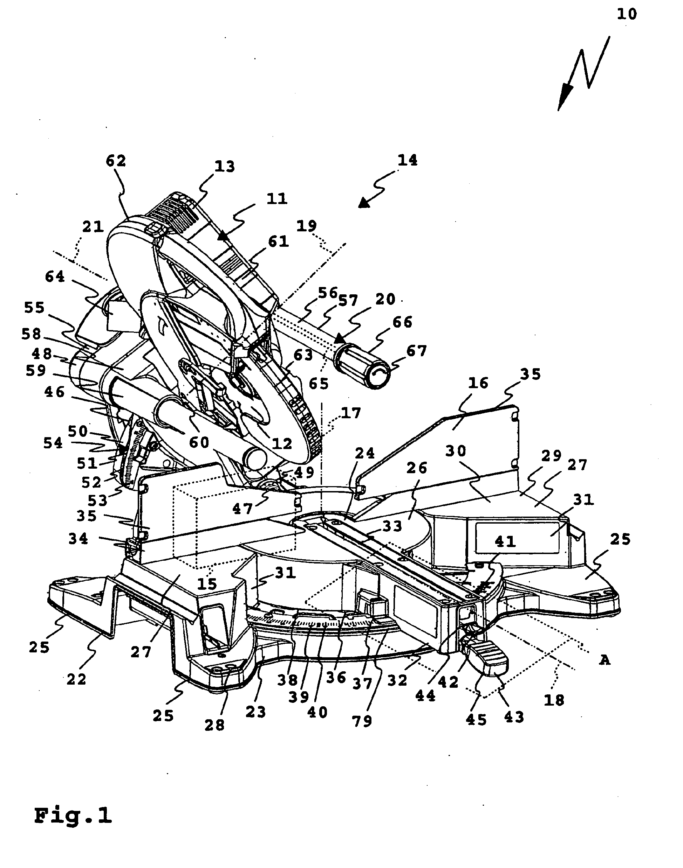

- Figur 1: eine Vorderansicht einer Werkzeugmaschine in Gestalt einer Gehrungssäge mit einer Klemmeinrichtung und einer Rasteinrichtung, die teilweise in einem Gehäuse eines Schwenkteils der Werkzeugmaschine angeordnet sind,

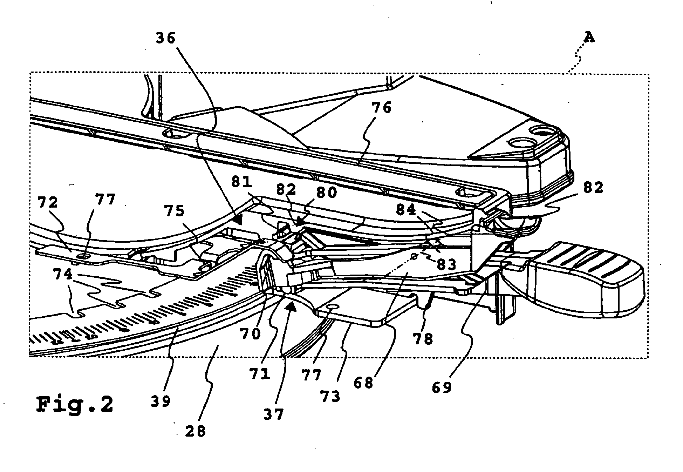

- Figur 2: eine Teilansicht etwa entsprechend einem Ausschnitt A in Figur 1 mit der Rasteinrichtung und der Klemmeinrichtung bei teilweise geöffnetem Gehäuse des Schwenkteils,

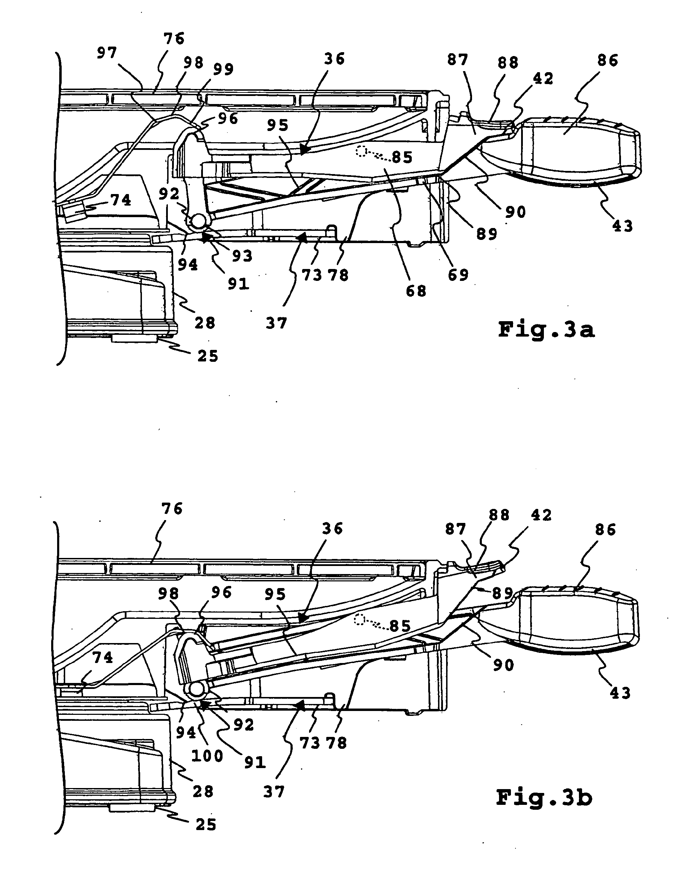

- Figur 3a: eine etwa dem Ausschnitt gemäß Figur 2 entsprechende Seitenansicht der Rasteinrichtung und der Klemmeinrichtung, beide im Freigabezustand,
- Figur 3b: die Ansicht gemäß Figur 3a, wobei die Rasteinrichtung in ihrer Raststellung, die Klemmeinrichtung in ihrer Klemmfreigabestellung ist,

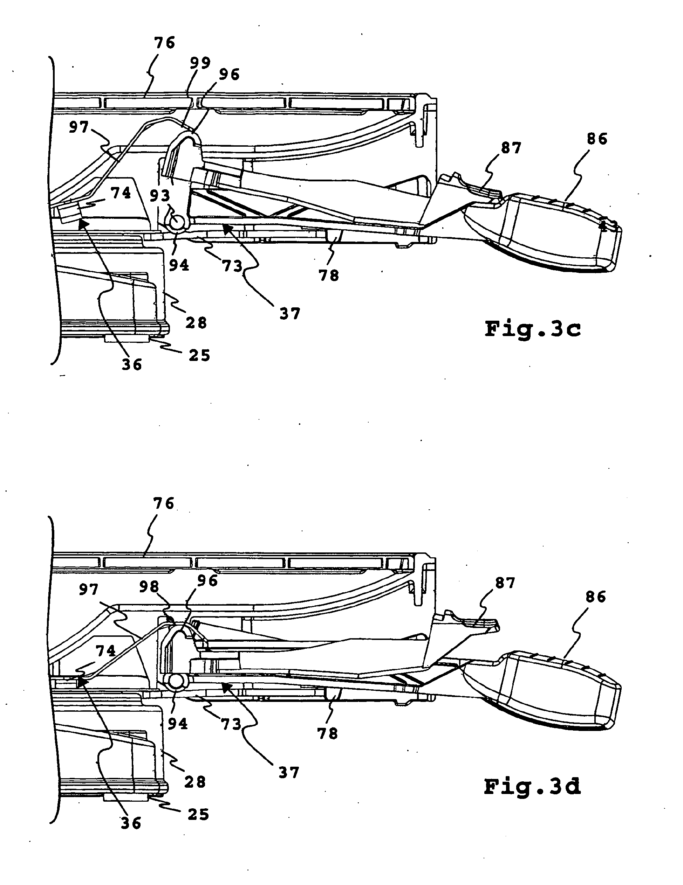

- Figur 3c: die Ansicht gemäß Figur 3a, wobei die Rasteinrichtung in die Rastfreigabestellung gelöst, die Klemmeinrichtung in die Klemmstellung geklemmt ist, und
- Figur 3d: die Ansicht gemäß Figur 3a, wobei die Rasteinrichtung in ihrer Raststellung und die Klemmeinrichtung in ihrer Klemmstellung sind.

Eine Säge 10 hat eine Sägeeinrichtung 11 mit einem drehbar gelagerten Kreis-Sägeblatt 12, das durch einen Antriebsmotor 13 antreibbar ist. Somit bildet die Säge 10 eine Werkzeugmaschine 14 zur trennenden Bearbeitung eines Werkstücks 15. Die Sägeeinrichtung 11 ist zum Sägen des Werkstücks 15 in mehreren Freiheitsgraden beweglich: die Sägeeinrichtung 11 ist um eine vertikale, das heißt in y-Richtung verlaufende Drehachse 17 drehbar, um eine horizontale, in z-Richtung verlaufende Schrägschwenkachse 18 in verschiedene Schrägschwenkpositionen schrägverschwenkbar, um eine Kappschwenkachse 19 schwenkbar und zudem noch parallel zur Schrägschwenkachse 18 an einer Linearführung 20, d.h. in z-Richtung, linear verstellbar.

Durch Drehen bzw. Schwenken der Sägeeinrichtung 11 um die Drehachse 17 bezüglich eines Vertikalanschlages 16 können Gehrungsschnitte durchgeführt werden. Somit erfüllt die Säge 10 die Funktion einer Gehrungssäge. Die Möglichkeit, die Sägeeinrichtung 11 um die Kappschwenkachse 19 zu schwenken, macht die Säge 10 zu einer Kappsäge. Der Linearfreiheitsgrad, die Sägeeinrichtung 11 an der Linearführung 20 entlang einer Linearführungsachse 21 linear hin und her zu bewegen bzw. zu ziehen, kennzeichnet die Säge 10 als eine Zug-Säge und im Zusammenhang mit dem Kappschwenken als Zug-Kappsäge. Durch Schrägschwenken der Sägeeinrichtung 11 um die Schrägschwenkachse 18 sind schräge Schnitte möglich.

Ein Maschinenbett 22 der Säge 10 bildet eine Schwenkbasis 23 für ein Schwenkteil 24, das um die Drehachse 17, die insoweit eine Schwenkachse bildet, drehbar an der Schwenkbasis 23 gelagert ist. Das Maschinenbett 22 ist mit Füßen 25 auf einem Untergrund abstellbar. An den Füßen 25 können Befestigungseinrichtungen vorgesehen sein, beispielsweise Höhenverstelleinrichtungen und/oder Schrauböffnungen zum Anschrauben an dem Untergrund.

Ein im Wesentlichen zylindrischer Werktisch-Körper 26 des Schwenkteils 24 ist zwischen Werkstücktisch-Vorsprüngen drehbar aufgenommen, die vor ein Bodenteil 28 der Schwenkbasis 23 seitlich nach oben vorstehen. Oberseiten des Körpers 26 und der Vorsprünge 27 bilden eine Auflagefläche 29 eines Werkstücktischs 30 zum Auflegen des Werkstücks 15.

Radial innere Vorderseiten der Vorsprünge 27 sind korrespondierend mit dem runden Außenumfang des Körpers 26 rund. Vertikale Seitenflächen 31 der Vorsprünge 27 bilden Schwenkanschläge für einen Betätigungsarm 32 des Schwenkteils 24, der nach radial außen vor den Körper 26 vorsteht. Ein Sägeschlitz 33 erstreckt sich an Auflagefläche 29 des Körpers 26 etwa von der Drehachse 17 bis zum radial äußeren, freien Ende des Betätigungsarms 32. Auch die Oberseite des Betätigungsarms 32 bildet eine Auflagefläche des Werkstücktisches 30.

An der Oberseite der Vorsprünge 27 ist ein Anschlagteil 34 angeordnet, an dem Anschlagplatten 35 zur Bildung des Vertikalanschlages 16 befestigbar sind. Zwischen den Anschlagplatten 35 ist ein Freiraum vorhanden.

Das Schwenkteil 24 ist bezüglich der Drehachse 17 mit Hilfe einer Rasteinrichtung 36 oder einer Klemmeinrichtung 37 drehfest festlegbar. Die Rasteinrichtung 36 verrastet mit einer Rastbasis 38 an Rastpositionen. Die Klemmeinrichtung 37 ist an einer Klemmbasis 39 auch zwischen den Rastpositionen festlegbar.

Ein Bogenteil 40, das an einer Vorderseite des Bodenteils 28 angeordnet ist, bildet die Rastbasis 38 und die Klemmbasis 39. An einer Oberseite des Bogenteils 40 ist eine Schwenkwinkelskala 41 angeordnet.

Eine Rast-Betätigungshandhabe 42 und eine Klemm-Betätigungshandhabe 43 stehen nach radial außen vor den Betätigungsarm 32 einer Rast-Betätigungseinrichtung 44 und einer Klemm-Betätigungseinrichtung 45 vor. Zumindest die Klemm-Betätigungshandhabe 43 bildet eine Bedienhandhabe zum Schwenken des Schwenkteils 24. Mit den Betätigungseinrichtungen 44, 45 können die Rasteinrichtung 36 und die Klemmeinrichtung 37 zwischen einer das Schwenkteil an der Schwenkbasis 23 drehfest haltenden Haltestellung und einer ein Schwenken ermöglichenden Freigabestellung verstellt werden.

Die Betätigungshandhaben 42, 43 sind unmittelbar nebeneinander angeordnet. Somit kann mit einer Hand die Klemm-Betätigungseinrichtung zwischen einer Klemmfreigabestellung und einer Klemmstellung verstellt werden, während dieselbe Hand die Rast-Betätigungseinrichtung in der Rastfreigabestellung hält, so das die Rasteinrichtung 36 nicht mit der Rastbasis 38 verrastet. Ein Schwenkwinkel ist somit frei wählbar, auch zwischen Rastpositionen der Rasteinrichtung.

An der dem Betätigungsarm 32 entgegengesetzten Seite des Schwenkteils 24 ist eine Schrägschwenkbasis 46 mit einem Schwenklager 47 angeordnet, an dem ein Schräg-Schwenkträger 48 um die Schrägschwenkachse 18 schwenkbar gelagert ist. Von einem radial vor den Werkstücktisch-Körper 26 vorstehenden Tragarm 49 steht ein Lagergehäuse 50 nach oben ab. An der bogenförmigen Oberseite des Lagergehäuses 50 verläuft eine bogenförmige Zahnung 51. Neben der Zahnung 51 ist eine Stufenscheibe 52 positioniert, die ebenfalls eine bogenförmige obere Stirnseite hat. An der Vorderseite der Stufenscheibe 52 ist eine Schrägschwenkwinkelskala 53 zur Anzeige des jeweiligen Schrägschwenkwinkels des Schwenkträgers 48 angeordnet.

Die Zahnung 51 bildet einen Bestandteil eines Schrägschwenkgetriebes 54, mit dem eine jeweilige Schrägschwenkposition des Schwenkträgers 48 und somit der an diesem angeordneten Sägeeinrichtung 11 einstellbar ist. Das Schrägschwenkgetriebe 54 ist in einem Schwenkträgergehäuse 55 des Schwenkträgers 48 angeordnet.

Führungsrohre 56 stehen horizontal vor den Schwenkträger 48 vor. Die Führungsrohre 56 sind Linearführungselemente 57 der Linearführung 20. Ein Sägeschlitten 58 ist an den Linearführungselementen 57 linear geführt. Beispielsweise durchdringen die Führungsrohre 56 Führungsbuchsen 59 des Sägeschlittens 58.

Die Sägeeinrichtung 11 ist an einem Kapp-Schwenklager 60 an dem Sägeschlitten 58 um die Kappschwenkachse 19 schwenkbar gelagert. Die Sägeeinrichtung 11 kann von einem Bediener an einem Handgriff 61 an ihrem Gehäuse 62 ergriffen werden und um die Kappschwenkachse 19 geschwenkt oder entlang der Linearführungsachse 21 gezogen werden. In dem Gehäuse 62 ist der Antriebsmotor 13 aufgenommen. Ferner ist an dem Gehäuse 62 ein Sägeschutz 63 schwenkbar gelagert, der vor Verletzungen durch das Sägeblatt 12 schützt, beim Sägen jedoch in das Gehäuse 62 einschwenkt und das Sägeblatt 12 freigibt. An einem Absauganschluss 64 kann beim Sägen auftretender Staub abgesaugt werden.

Das Schrägschwenkgetriebe 54 ist von der Vorderseite der Säge 10 her bedienbar. Eine zum Schrägschwenkgetriebe 54 führende Welle 65 einer Betätigungseinrichtung 66 des Schrägschwenkgetriebes 54 ist in einem Innenraum des in der Zeichnung rechten Führungsrohrs 56 angeordnet. Ein Handgriff 67 steht vor das vordere, freie Ende des Führungsrohres 56 vor und kann bequem von einem Bediener ergriffen und gedreht werden. Entsprechend dem Drehsinn beim Drehen des Handgriffes 67 schwenkt das Schrägschwenkgetriebe 54 den Schwenkträger 48 um die Schrägschwenkachse 18.

Die Rast-Betätigungseinrichtung 44 enthält einen Rast-Betätigungshebel 68, die Klemm-Betätigungseinrichtung 45 einen Klemm-Betätigungshebel 69. An den jeweils vorderen, freien Enden der Betätigungshebel 68, 69 sind Betätigungspartien 70, 71 zum Betätigen eines Rastteils 72 und eines Klemmteils 73.

Das Rastteil 72 verrastet an vorbestimmten Drehpositionen des Schwenkteils 24 mit Rastausnehmungen 74 an der Rastbasis 38. Die Rastausnehmungen 74, in die ein Rastvorsprung 75 eingreift, sind an einem Innenumfang des Bogenteils 40 angeordnet und definieren Rastpositionen.

Das Rastteil 72 und das Klemmteil 73 sind in sich federnde Stanz-Biegeteile. Das Rastteil 72 und das Klemmteil 73 sind in ihre jeweilige Haltestellung vorgespannt.

Das Rastteil 72 und das Klemmteil 73 sind beispielsweise an einem Gehäuse 76 des Betätigungsarms 32 befestigt. Dafür sind beispielsweise Befestigungsbohrungen 77 vorgesehen. Ferner stützt sich das Klemmteil 73 an einem Gehäusevorsprung 78 des Gehäuses 76 ab. Der Gehäusevorsprung 78 steht nach unten vor. Das Klemmteil 73 stützt sich mit seiner Rückseite an dem Gehäusevorsprung 78 ab. Während das Rastteil 72 von oben her in die Rastausnehmungen 74 eingreift, klemmt das Klemmteil 73 die Klemmbasis 39 von unten. Das Klemmteil 73 ist gegen eine Außenumfangspartie 79 des Bogenteils 40 von unten her gespannt. Die Außenumfangspartie 79 steht frei. Das Klemmteil 73 ragt nach radial innen zwischen das Bodenteil 28 und das Bogenteil 40.

Das Klemmteil 73 klemmt die Klemmbasis 39 von unten. Das Rastteil 72 verrastet von oben mit der Rastbasis 38.

Der Klemm-Betätigungshebel 69 ist im Bereich seiner Betätigungspartie 71, das heißt an seinem vorderen freien Ende schwenkbar gelagert. An der Unterseite des vorderen freien Endes ist die Betätigungspartie 71. An der Oberseite des freien Endes ist ein Kerblager 80 mit einer Lagerkerbe 81 am Klemm-Betätigungshebel 69 angeordnet, in die ein am Gehäuse 76 angeordneter Lagervorsprung 82 eingreift. Der Lagervorsprung 82 steht nach unten vor das Gehäuse 76 vor. Durch die Federspannung des Klemmteils 73 wird der Klemm-Betätigungshebel 69 in Richtung des Kerblagers 80 vorgespannt, so dass die Lagerkerbe 81 in dem Lagervorsprung 82 bleibt.

Der Rast-Betätigungshebel 68 ist um eine Hebelachse 83 schwenkbar an dem Klemm-Betätigungshebel 69 gelagert. Die Hebelachse 83 befindet sich etwa in einem mittleren Bereich des Klemm-Betätigungshebels 69.

Der Rast-Betätigungshebel 68 ist reiterartig an dem Klemm-Betätigungshebel 69 angeordnet. Arme 84 des Rast-Betätigungshebels 68 verlaufen seitlich an dem Klemm-Betätigungshebel 69. Zur Bildung der Hebelachse 83 könnten die Betätigungshebel 68, 69 von einer Achs-Welle durchdrungen sein. An der Innenseite der Arme 84 sind jedoch LagerVorsprünge 85 vorgesehen, die in korrespondierende Ausnehmungen an den Seitenflächen des Klemm-Betätigungshebels 69 eingreifen.

Die Betätigungshebel 68, 69 stehen vor das Gehäuse 76 des Betätigungsarms 32 vor. An dem dort befindlichen freien Ende der Betätigungshebel 68, 69 sind die beiden Betätigungshandhaben 42, 43 angeordnet. Die Klemm-Betätigungshandhabe 43 enthält ein mit einer Bedien-Hand umgreifbares Handstück 86 mit einer balligen Gestalt. Das Handstück 86 kann mit einer Hand umgriffen werden. Die Bedien-Hand kann zugleich ein Finger-Betätigungsstück 87 der Rast-Betätigungshandhabe 42 betätigen. Das Betätigungsstück 87 ist an einem Ende der Arme 84 angeordnet und verbindet diese. Am Finger-Betätigungsstück 87 ist eine Griffmulde 88 zum Eingreifen mit einem Finger der Bedien-Hand vorhanden. Ein Bediener kann den Rast-Betätigungshebel 68 mit dem Finger nach unten drücken und ihn so in seine Rastfreigabestellung bringen, während er durch Auf- und Abbewegen des Klemm-Betätigungshebels 69 am Handstück 86 die Klemmung der Klemmeinrichtung 37 aufhebt oder herbeiführt. Das Handstück 86 hat zweckmäßigerweise eine Riffelung.

Beim Verstellen des Rast-Betätigungshebels 68 in die Rastfreigabestellung schlägt dieser mit einer Anschlagfläche 89 an Anschlagflächen 90 des Klemm-Betätigungshebels 69 an. Die Anschlagfläche 89, 90 sind im Bereich zwischen der Hebelachse 83 und den Betätigungshandhaben 42, 43 angeordnet. Die Anschlagflächen 89, 90 sind derart positioniert und ausgestaltet, dass der Rast-Betätigungshebel 68 so frei an dem Klemm-Betätigungshebel 69 schwenkbeweglich ist, dass er die Rastfreigabestellung und Raststellung unabhängig davon einnehmen kann, ob der Klemm-Betätigungshebel 69 in seiner Klemmstellung oder seiner Klemmfreigabestellung ist. Auch zwischen dem Klemm-Betätigungshebel 69 und dem Bereich der Arme 84 zwischen der Hebelachse 83 und den Betätigungspartien 70 ist dementsprechend ausreichend Spiel vorgesehen.

Während der Rast-Betätigungshebel 68 durch den Bediener in seiner jeweiligen Halte- oder Freigabestellung gehalten werden muss, rastet der Klemm-Betätigungshebel 69 mit Hilfe einer Rastanordnung 91 zumindest in seiner Klemmstellung ein. Die Rastanordnung 91 ist im Bereich der Betätigungspartie 71 angeordnet. Die Rastanordnung 91 umfasst eine an der Unterseite des Klemm-Betätigungshebels 69 an einem Drehlager 92 drehbar gelagerte Walze 93, die auf dem Klemmteil 73 abrollt. In der Klemmstellung greift die Walze 93 in eine rinnenartige Ausnehmung 94 des Klemmteils 73 ein. Beim Verlagern in die Klemmfreigabestellung rollt die Walze 93 aus der Ausnehmung 94.

Ferner schwenkt die Betätigungspartie 71 vorteilhaft bei einem Verstellen von der Klemm- in die Freigabestellung über eine Kippposition 100, so dass der Klemm-Betätigungshebel 69 auch in seiner Freigabestellung stabil verbleibt.

Die Betätigungspartie 71 des Klemm-Betätigungshebels 69 wirkt auf ein vorderes, freies Ende des Klemmteils 73, also nahe an dem Bereich, wo das Klemmteil 73 an die Klemmbasis 39 drückt. Ferner ist die Betätigungspartie 71 am vorderen Ende des Klemm-Betätigungshebels 69 angeordnet, so dass die Bedienkraft zum Verlagern der Klemmeinrichtung 37 in die Klemmfreigabestellung klein ist, auch wenn die Klemmeinrichtung 37 das Schwenkteil 324 mit großer Kraft an der Schwenkbasis 23 verklemmt.

Die Betätigungshebel 68, 69 bestehen zweckmäßigerweise aus Kunststoff. Zur Verstärkung der Betätigungshebel 68, 69 kann eine Rippen- oder Wabenanordnung 95 vorgesehen sein.

Die Rast-Betätigungspartie 70 ist an den vorderen, freien Enden der Arme 84 angeordnet. Die Betätigungspartie 70 umfasst zwei nach oben vorstehende, zweckmäßigerweise gekrümmte, z.B. höckerartige Betätigungsvorsprünge 96, die auf Betätigungsbereiche von Betätigungsarmen 97 des Rastteils 72 zusammenwirken. Die Vorsprünge 96 untergreifen die Betätigungsarme 97. Die Arme 97 sind korrespondierend mit der Krümmung der Betätigungsvorsprünge 96 gebogen. Die Betätigungsarme 97 liegen federnd auf den Betätigungsvorsprüngen 96 auf.

Die Betätigungsvorsprünge 96 können zur Verbessung der Stabilität miteinander verbunden sein.

Das Kerblager 80 ist zwischen den Betätigungsvorsprüngen 96 angeordnet. In der Raststellung befinden sich die Betätigungsvorsprünge 96 etwa auf derselben Höhe wie die Lagerkerbe 81. Dann liegt ein mittlerer Abschnitt 98 der Betätigungsarme 97 auf den Lagervorsprüngen 96 auf. Durch Drücken des Rast-Betätigungshebels 68 nach unten werden die Betätigungsvorsprünge 96 nach oben verstellt und heben die Betätigungsarme 97 an, so dass der Rastvorsprung 75 außer Eingriff mit einer jeweiligen Rastausnehmung 74 gelangt. Dann kann das Schwenkteil 24 weiter geschwenkt werden.

In der dann erreichten Rastfreigabestellung liegen Endabschnitte 99 an den freien Enden der Betätigungsarme 97, an den Betätigungsvorsprüngen 96 an, beispielsweise an deren oberem Kopfabschnitt. In der Rastfreigabestellung liegt das vordere Ende des Endabschnitts 99 am oberen, gekrümmten Abschnitt des Betätigungsvorsprungs 96 an. Die Endabschnitte 99 verlaufen zu dem Betätigungsvorsprung 96 hin. Die Endabschnitte 99 stehen auch in der Rastfreigabestellung derart weit über Scheitelpunkte der Betätigungsvorsprünge 96 vor, dass die Betätigungsvorsprünge 96 stets im Eingriff mit den Betätigungsarmen 97 sind. Die Betätigungsarme 97 "schnappen" nicht vor die Betätigungsvorsprünge 96 vor.

Bei Schwenkwinkelpositionen zwischen den Rastausnehmungen 74 liegt das Rastteil 72, insbesondere dessen Rastvorsprung 75, federnd auf der Oberseite des Bogenteiles 40 auf. Beim Weiterschwenken des Schwenkteils 24 rastet der Rastvorsprung 75 in die jeweils nächste Rastausnehmung 74 ein, wenn die Rast-Betätigungseinrichtung 44 in der Raststellung ist.

Die Rastausnehmungen 74 sind bogenförmig an der Schwenkbasis 23 angeordnet.

## Patentansprüche

1. Werkzeugmaschine, insbesondere Säge (10), zur trennenden Bearbeitung eines Werkstücks (15), mit einem an einer Schwenkbasis (23) um eine Schwenkachse schwenkbaren Schwenkteil (24), mit einer Rasteinrichtung (36), die mit einer manuell bedienbaren Rast-Betätigungseinrichtung (44) zwischen einer mit einer Rastbasis (36) verrasteten, das Schwenkteil (24) an der Schwenkbasis (23) drehfest haltenden Raststellung und einer Rastfreigabestellung verstellbar ist, und mit einer Klemm-Betätigungseinrichtung (45), die mit einer manuell bedienbaren Klemmeinrichtung (37) zwischen einer an einer Klemmbasis (39) klemmenden, das Schwenkteil (24) an der Schwenkbasis (23) drehfest haltenden Klemmstellung und einer Klemmfreigabestellung verstellbar ist, wobei das Schwenkteil (24) bezüglich der Schwenkbasis (23) drehbar ist, wenn die Rasteinrichtung (36) in der Rästfreigabestellung und die Klemmeinrichtung (37) in der Klemmfreigabestellung sind, wobei eine Rast-Betätigungshandhabe (42) der Rast-Betätigungseinrichtung (44) und eine Klemm-Betätigungshandhabe (43) der Klemm-Betätigungseinrichtung (45) derart nahe beieinander angeordnet sind, dass mit einer Hand die Rast-Betätigungseinrichtung (44) in der Rastfreigabestellung gehalten und die Klemmeinrichtung (37) zwischen der Klemmstellung und der Klemmfreigabestellung verstellt werden können, wobei die Rast-Betätigungseinrichtung (44) einen Rast-Betätigungshebel (68) mit einer Betätigungspartie (70) zum Verstellen der Rasteinrichtung (36) in die Rastfreigabestellung und/oder die Raststellung aufweist, und wobei die Klemm-Betätigungseinrichtung (45) einen Klemm-Betätigungshebel (69) mit einer Betätigungspartie (71) zum Verstellen der Klemmeinrichtung (37) in die Klemmfreigabestellung oder die Klemmstellung aufweist, **dadurch gekennzeichnet, dass** der Rast-Betätigungshebel (68) schwenkbar an dem Klemm-Betätigungshebel (69) gelagert ist oder der Klemm-Betätigungshebel (68) schwenkbar an dem Rast-Betätigungshebel (69) gelagert ist und dass die Hebelachse des Klemm-Betätigungshebels (69) von der Hebelachse des Rast-Betätigungshebels (69) separat ist.

2. Werkzeugmaschine nach Anspruch 1, **dadurch gekennzeichnet, dass** die Rasteinrichtung (36) und die Klemmeinrichtung (37) an dem Schwenkteil (24) angeordnet sind, und dass die Rastbasis (36) und die Klemmbasis (39) an der Schwenkbasis (23) angeordnet sind.

3. Werkzeugmaschine nach Anspruch 1 oder 2, **dadurch gekennzeichnet, dass** die Klemm-Betätigungshandhabe (43) und/oder die Rast-Betätigungshandhabe (42) vor das Schwenkteil (24) vorstehen und eine Bedienhandhabe zum Schwenken des Schwenkteils (24) bilden.

4. Werkzeugmaschine nach einem der vorhergehenden Ansprüche, **dadurch gekennzeichnet, dass** die Klemm-Betätigungshandhabe (43) ein mit der Hand umgreifbares Handstück (86) und die Rast-Betätigungshandhabe (42) ein mit einem Finger, insbesondere einem Daumen, der das Handstück (86) umgreifenden Hand betätigbares Finger-Betätigungsstück (87) umfassen.

5. Werkzeugmaschine nach einem der vorhergehenden Ansprüche, **dadurch gekennzeichnet, dass** die Rastbasis (36) bogenförmig angeordnete Rastaufnahmen (74) oder Rastvorsprünge aufweist.

6. Werkzeugmaschine nach einem der vorhergehenden Ansprüche, **dadurch gekennzeichnet, dass** die Rastbasis (36) und/oder die Klemmbasis (39) durch ein insbesondere plattenartiges Bogenteil (40) gebildet sind.

7. Werkzeugmaschine nach einem der vorhergehenden Ansprüche, **dadurch gekennzeichnet, dass** die Rasteinrichtung (36) und/oder die Klemmeinrichtung (37) in Richtung ihrer Klemmstellung oder Raststellung federbeaufschlagt sind.

8. Werkzeugmaschine nach einem der vorhergehenden Ansprüche, **dadurch gekennzeichnet, dass** die Rasteinrichtung (36) ein Richtung der Raststellung federbeaufschlagtes, durch die Rast-Betätigungseinrichtung (44) betätigbares Rastteil (72) zum Verrasten mit der Rastbasis (36) aufweist.

9. Werkzeugmaschine nach einem der vorhergehenden Ansprüche, **dadurch gekennzeichnet, dass** die Klemmeinrichtung (37) ein in Richtung der Klemmstellung federbeaufschlagtes, durch die Klemm-Betätigungseinrichtung (45) betätigbares Klemmteil (73) zum Verklemmen mit der Klemmbasis (39) aufweist.

10. Werkzeugmaschine nach einem der vorhergehenden Ansprüche, **dadurch gekennzeichnet, dass** die Klemmeinrichtung (37), insbesondere die Klemm-Betätigungseinrichtung (45), in der Klemmstellung und/oder in der Klemmfreigabestellung festlegbar ist.

11. Werkzeugmaschine nach einem der vorhergehenden Ansprüche, **dadurch gekennzeichnet, dass** die Rasteinrichtung (36), insbesondere die Rast-Betätigungseinrichtung (44), in der Raststellung und/oder in der Rastfreigabestellung festlegbar ist.

12. Werkzeugmaschine nach einem der vorhergehenden Ansprüche, **dadurch gekennzeichnet, dass** die Rast-Betätigungseinrichtung (44) und die Klemm-Betätigungseinrichtung (45) bewegungsgekoppelt sind.

13. Werkzeugmaschine nach einem der vorhergehenden Ansprüche, **dadurch gekennzeichnet, dass** die Rast-Betätigungseinrichtung (44) derart frei beweglich gelagert ist, dass sie die Rastfreigabestellung oder die Raststellung bei einem Verstellen der Klemm-Betätigungseinrichtung (45) zwischen der Klemmfreigabestellung und der Klemmstellung beibehalten kann.

14. Werkzeugmaschine nach einem der vorhergehenden Ansprüche, **dadurch gekennzeichnet, dass** der Klemm-Betätigungshebel (69) im Bereich seiner Betätigungspartie (71) schwenkbar gelagert ist.

15. Werkzeugmaschine nach einem der vorhergehenden Ansprüche, **dadurch gekennzeichnet, dass** die Betätigungspartien (70, 71) des Rast-Betätigungshebels (68) und des Klemm-Betätigungshebels (69) etwa denselben Hebelabstand zu der gemeinsamen Hebelachse (83) aufweisen.

16. Werkzeugmaschine nach einem der vorhergehenden Ansprüche, **dadurch gekennzeichnet, dass** die Betätigungspartie (70) des Rast-Betätigungshebels (68) im Bereich einer Schwenklagerung (80, 81) des Klemm-Betätigungshebels (69) angeordnet ist.

17. Werkzeugmaschine nach einem der vorhergehenden Ansprüche, **dadurch gekennzeichnet, dass** an der Rast-Betätigungseinrichtung (44) und/oder der Klemm-Betätigungseinrichtung (45), insbesondere an deren Betätigungspartien (70, 71), Rastanordnungen (91) zum Halten des Betätigungshebels (68, 69) in seiner jeweiligen Stellung angeordnet sind.

18. Werkzeugmaschine nach Anspruch 17, **dadurch gekennzeichnet, dass** die Rastanordnung (91) eine Walze (93) oder einen Gleitvorsprung umfasst, die oder der in der Raststellung der Rastanordnung (91) in eine Ausnehmung (94) am Rastteil (72) oder Klemmteil (73) eingreift.

19. Werkzeugmaschine nach einem der vorhergehenden Ansprüche, **dadurch gekennzeichnet, dass** das Schwenkteil (24) einen Werkstück-Tisch zum Ablegen eines Werkstücks (15) umfasst oder bildet.

20. Werkzeugmaschine nach einem der vorhergehenden Ansprüche, **dadurch gekennzeichnet, dass** das Schwenkteil (24) einen Schwenkträger (48) zum Verschwenken einer Trenneinrichtung mit einem durch einen Antriebsmotor (13) antreibbaren Trennwerkzeug, insbesondere ein Sägeblatt (12), umfasst oder bildet.

## Claims

1. Machine tool, in particular saw (10), for cutting a workpiece (15), comprising a swivel part (24) pivotable about a pivoting axis on a swivel base (23), a locking device (36) movable by means of a manual lock operating device (44) between a locking position locked to a locking base (36) and non-rotatably holding the swivel part (24) to the swivel base (23) and a lock release position, and a clamping device (37) movable by means of a manual clamp operating device (45) between a clamping position clamped to a clamping base (39) and non-rotatably holding the swivel part (24) to the swivel base (23) and a clamp release position, wherein the swivel part (24) is rotatable relative to the swivel base (23) if the locking device (36) is in the lock release position and the clamping device (37) is in the clamp release position, wherein a lock operating handle (42) of the lock operating device (44) and a clamp operating handle (43) of the clamp operating device (45) are arranged close to each other such that, using one hand, the lock operating device (44) can be held in the lock release position while the clamping device (37) can be moved between the clamping position and the clamp release position, wherein the lock operating device (44) is provided with a lock operating lever (68) with an operating section (70) for moving the locking device (36) to the lock release position and/or the locking position, and wherein the clamp operating device (45) is provided with a clamp operating lever (69) with an operating section (71) for moving the clamping device (37) to the clamp release position or the clamping position, **characterised in that** the lock operating lever (68) is pivoted on the clamp operating lever (69) or the clamp operating lever (68) is pivoted on the lock operating lever (69), and **in that** the lever axis of the clamp operating lever (69) is separate from the lever axis of the lock operating lever (69).

2. Machine tool according to claim 1, **characterised in that** the locking device (36) and the clamping device (37) are located on the swivel part (24), and **in that** the locking base (36) and the clamping base (39) are located on the swivel base (23).

3. Machine tool according to claim 1 or 2, **characterised in that** the clamp operating handle (43) and/or the lock operating handle (42) project in front of the swivel part (24) and form a control handle for pivoting the swivel part (24).

4. Machine tool according to any of the preceding claims, **characterised in that** the clamp operating handle (43) comprises a hand piece (86) which can be encompassed with a hand and the lock operating handle (42) comprises a finger operating piece (87) which can be operated with a finger, in particular a thumb, of the hand encompassing the hand piece (86).

5. Machine tool according to any of the preceding claims, **characterised in that** the locking base (36) is provided with locking recesses (74) or locking projections arranged in an arc.

6. Machine tool according to any of the preceding claims, **characterised in that** the locking base (36) and/or the clamping base (39) is/are represented by an in particular plate-like curved part.

7. Machine tool according to any of the preceding claims, **characterised in that** the locking device (36) and/or the clamping device (37) is/are spring-loaded towards their clamping or locking position respectively.

8. Machine tool according to any of the preceding claims, **characterised in that** the locking device (36) is provided with a locking part (72) spring-loaded towards the locking position and operated by means of the lock operating device (44) for locking to the locking base (36).

9. Machine tool according to any of the preceding claims, **characterised in that** the clamping device (37) is provided with a clamping part (73) spring-loaded towards the clamping position and operated by means of the clamp operating device (45) for clamping to the clamping base (39).

10. Machine tool according to any of the preceding claims, **characterised in that** the clamping device (37), in particular the clamp operating device (45), can be locked in the clamping position and/or the clamp release position.

11. Machine tool according to any of the preceding claims, **characterised in that** the locking device (36) in particular the lock operating device (44), can be locked in the locking position and/or the lock release position.

12. Machine tool according to any of the preceding claims, **characterised in that** the lock operating device (44) and the clamp operating device (45) are coupled for movement.

13. Machine tool according to any of the preceding claims, **characterised in that** the lock operating device (44) is movably mounted such that it can maintain the lock release position or the locking position while the clamp operating device (45) is moved between the clamp release position and the clamping position.

14. Machine tool according to any of the preceding claims, **characterised in that** the clamp operating lever (69) is pivoted in the region of its operating section (71).

15. Machine tool according to any of the preceding claims, **characterised in that** the operating sections (70, 71) of the lock operating lever (68) and the clamp operating lever (69) have approximately the same lever distance from the common lever axis (83).

16. Machine tool according to any of the preceding claims, **characterised in that** the operating section (70) of the lock operating lever (68) is located in the region of a swivel mounting (80, 81) of the clamp operating lever (69).

17. Machine tool according to any of the preceding claims, **characterised in that** locking arrangements (91) for holding the locking lever (68, 69) in its current position are provided on the lock operating device (44) and/or the clamp operating device (45), in particular on their operating sections (70, 71).

18. Machine tool according to claim 17, **characterised in that** the locking arrangement (91) comprises a roller (93) or a sliding projection which engages a recess (94) in the locking part (72) or the clamping part (73) in the locking position of the locking arrangement (91).

19. Machine tool according to any of the preceding claims, **characterised in that** the swivel part (24) comprises a work table for depositing a workpiece (15).

20. Machine tool according to any of the preceding claims, **characterised in that** the swivel part comprises or forms a swivel support (48) for pivoting a cutting device with a cutting tool driven by a drive motor (13), in particular a saw blade (12).

## Revendications

1. Machine-outil, en particulier scie (10), servant au tronçonnage d'une pièce (15), avec un élément pivotant (24) pouvant pivoter autour d'un axe de pivotement au niveau d'une base pivotante (23), avec un dispositif d'arrêt (36), qui peut être déplacé avec un dispositif d'actionnement d'arrêt (44) à commande manuelle entre une position d'arrêt enclenchée avec une base d'arrêt (36) et maintenant l'élément pivotant (24) de manière solidaire en rotation au niveau de la base pivotante (23) et une position de libération d'arrêt, et avec un dispositif d'actionnement de serrage (45), qui peut être déplacé avec un dispositif de serrage (37) à commande manuelle entre une position de serrage bloquée au niveau d'une base de serrage (39) et maintenant l'élément pivotant (24) de manière solidaire en rotation au niveau de la base pivotante (23) et une position de libération de serrage, dans lequel l'élément pivotant (24) est rotatif par rapport à la base pivotante (23) lorsque le dispositif d'arrêt (36) est en position de libération d'arrêt et le dispositif de serrage (37) est en position de libération de serrage, dans lequel une manette d'actionnement d'arrêt (42) du dispositif d'actionnement d'arrêt (44) et une manette d'actionnement de serrage (43) du dispositif d'actionnement de serrage (45) sont agencées l'une près de l'autre de telle sorte que le dispositif d'actionnement d'arrêt (44) est maintenu dans la position de libération d'arrêt avec une main et le dispositif de serrage (37) peut être déplacé entre la position de serrage et la position de libération de serrage, dans lequel le dispositif d'actionnement d'arrêt (44) présente un levier d'actionnement d'arrêt (68) avec une partie d'actionnement (70) pour déplacer le dispositif d'arrêt (36) dans la position de libération d'arrêt et/ou la position d'arrêt, et dans lequel le dispositif d'actionnement de serrage (45) présente un levier d'actionnement de serrage (69) avec une partie d'actionnement (71) pour déplacer le dispositif de serrage (37) dans la position de libération de serrage ou la position de serrage, **caractérisée en ce que** le levier d'actionnement d'arrêt (68) est logé de manière pivotante au niveau du levier d'actionnement de serrage (69) ou le levier d'actionnement de serrage (68) est logé de manière pivotante au niveau du levier d'actionnement d'arrêt (69) et **en ce que** l'axe du levier d'actionnement de serrage (69) est séparé de l'axe du levier d'actionnement d'arrêt (69).

2. Machine-outil selon la revendication 1, **caractérisée en ce que** le dispositif d'arrêt (36) et le dispositif de serrage (37) sont agencés au niveau de l'élément pivotant (24) et **en ce que** le base d'arrêt (36) et la base de serrage (39) sont agencées au niveau de la base pivotante (23).

3. Machine-outil selon la revendication 1 ou 2, **caractérisée en ce que** la manette d'actionnement de serrage (43) et/ou la manette d'actionnement d'arrêt (42) dépassent de l'élément pivotant (24) et forment une manette de commande servant à pivoter l'élément pivotant (24).

4. Machine-outil selon l'une quelconque des revendications précédentes, **caractérisée en ce que** la manette d'actionnement de serrage (43) comprend une poignée (86) pouvant être enveloppée par la main et la manette d'actionnement d'arrêt (42) comprend une pièce d'actionnement au doigt (87) pouvant être actionnée avec un doigt, en particulier avec le pouce, de la main enveloppant la poignée (86).

5. Machine-outil selon l'une quelconque des revendications précédentes, **caractérisée en ce que** la base d'arrêt (36) présente des logements d'arrêt (74) ou des saillies d'arrêt disposées en arc.

6. Machine-outil selon l'une quelconque des revendications précédentes, **caractérisée en ce que** la base d'arrêt (36) et/ou la base de serrage (39) sont formées par un élément en arc (40) en particulier de type plaque.

7. Machine-outil selon l'une quelconque des revendications précédentes, **caractérisée en ce que** le dispositif d'arrêt (36) et/ou le dispositif de serrage (37) sont sollicités par ressort dans le sens de leur position de serrage ou leur position d'arrêt.

8. Machine-outil selon l'une quelconque des revendications précédentes, **caractérisée en ce que** le dispositif d'arrêt (36) présente un élément d'arrêt (72) sollicité par ressort dans le sens de la position d'arrêt, pouvant être actionné par le dispositif d'actionnement d'arrêt (44) et à enclencher avec la base d'arrêt (36).

9. Machine-outil selon l'une quelconque des revendications précédentes, **caractérisée en ce que** le dispositif de serrage (37) présente un élément de serrage (73) sollicité par ressort dans le sens de la position de serrage, pouvant être actionné par le dispositif d'actionnement de serrage (45) et à bloquer avec la base de serrage (39).

10. Machine-outil selon l'une quelconque des revendications précédentes, **caractérisée en ce que** le dispositif de serrage (37), en particulier le dispositif d'actionnement de serrage (45), peut être fixé dans la position de serrage et/ou dans la position de libération de serrage.

11. Machine-outil selon l'une quelconque des revendications précédentes, **caractérisée en ce que** le dispositif d'arrêt (36), en particulier le dispositif d'actionnement d'arrêt (44) peut être fixé dans la position d'arrêt et/ou dans la position de libération d'arrêt.

12. Machine-outil selon l'une quelconque des revendications précédentes, **caractérisée en ce que** le dispositif d'actionnement d'arrêt (44) et le dispositif d'actionnement de serrage (45) sont couplés dynamiquement.

13. Machine-outil selon l'une quelconque des revendications précédentes, **caractérisée en ce que** le dispositif d'actionnement d'arrêt (44) est logé de manière librement mobile de telle sorte qu'il peut conserver la position de libération d'arrêt ou la position d'arrêt lors d'un déplacement du dispositif d'actionnement de serrage (45) entre la position de libération de serrage et la position de serrage.

14. Machine-outil selon l'une quelconque des revendications précédentes, **caractérisée en ce que** le levier d'actionnement de serrage (69) est logé de manière pivotante au niveau de sa partie d'actionnement (71).

15. Machine-outil selon l'une quelconque des revendications précédentes, **caractérisée en ce que** les parties d'actionnement (70, 71) du levier d'actionnement d'arrêt (68) et du levier d'actionnement de serrage (69) ont à peu près la même distance de levier par rapport à l'axe de levier (83) commun.

16. Machine-outil selon l'une quelconque des revendications précédentes, **caractérisée en ce que** la partie d'actionnement (70) du levier d'actionnement d'arrêt (68) est agencée au niveau d'un palier pivotant (80, 81) du levier d'actionnement de serrage (69).

17. Machine-outil selon l'une quelconque des revendications précédentes, **caractérisée en ce que** des agencements d'arrêt (91) servant à maintenir le levier d'actionnement (68, 69) dans sa position respective sont agencés au niveau du dispositif d'actionnement d'arrêt (44) et/ou du dispositif d'actionnement de serrage (45), en particulier au niveau de leurs parties d'actionnement (70, 71).

18. Machine-outil selon la revendication 17, **caractérisée en ce que** l'agencement d'arrêt (91) comprend un cylindre (93) ou une saillie coulissante qui s'engage dans la position d'arrêt de l'agencement d'arrêt (91) dans un évidement (94) sur l'élément d'arrêt (72) ou l'élément de serrage (73).

19. Machine-outil selon l'une quelconque des revendications précédentes, **caractérisée en ce que** l'élément pivotant (24) comprend ou forme une table porte-pièce servant à déposer une pièce (15).

20. Machine-outil selon l'une quelconque des revendications précédentes, **caractérisée en ce que** l'élément pivotant (24) comprend ou forme un support pivotant (48) servant à pivoter un dispositif de tronçonnage avec un outil de tronçonnage, en particulier une lame de scie (12), pouvant être commandé par un moteur d'entraînement (13).
